# EUROPEAN PATENT APPLICATION

(11) **EP 2 430 911 A1**
(43) Date of publication of application: **21.03.2012**
(21) Application number: 09844300.5
(22) Date of filing: 08.05.2009
(51) Int. Cl.: A01G 31/02

(54) **FLOATING ASSEMBLY STRUCTURE**

(71) Applicant: Macrofitas, S.L., 28224 Madrid (ES)
(72) Inventor: RIESCO PRIETO, Javier, E-28224 Pozuelo de Alarcón Madrid (ES); RIESCO PRIETO, Pablo, E-28224 Pozuelo de Alarcón Madrid (ES); TORRES JUNCO, Vicente, E-28224 Pozuelo de Alarcón Madrid (ES)
(74) Representative: Naranjo Marcos, Maria Antonia
(86) International application number: PCT/ES2009/000246
(87) International publication number: WO 2010/128170

(57) **Abstract**

The invention relates to a floating assembly structure with independent support, intended for securing containers or substrates for floating plant species crops. The structure is shaped like a flat polygon with at least three sides and has at least two elements for assembly with another floating assembly structures, such that a meshed system can be formed on the surface of the water by assembling multiple structures to one another. Furthermore the structure includes a plurality of coupling bars for securing the aforementioned containers and is configured to withstand the forces and moments generated by the movement of the water and by the growth of the plants.

## Description

The invention herein, to be protected under the invention patent registration, relates to a floating assembly structure with independent support, allowing non-independent containers or substrates used for cropping on the surface of the water to be secured and is further configured such that it can be assembled to other similar structures.

### Background of the Invention:

The method for planting and growing plants on the surface of the water without the need for land is being widely used in the treatment of wastewater and toxic discharges. These plants can be supported on an independent support or a substrate or container that is, in turn, directly or indirectly supported by land.

There have been various substrates and forms of support used for cultivating macrophytes. Thus, for example, the independent support elements most commonly used in wastewater treatment plants installed to date are based on using floating polyethylene tubes, such that the plants are attached to them by means of a wire that is connected to its root ball. The polyethylene tubes can further be joined linearly to other rubber tubes by means of staples at a certain distance, such that the plant is secured between both tubes by pressure. However, none of these options is optimal, since in the former case, the plants grow around the tube to which they are attached as they grow, until the leaves of the plants are finally submerged in the water, leaving the roots growing outwards, so most of the plants eventually die. In the second case, the plants eventually die by strangulation due to the pressure they are subjected to be between the two tubes.

Another option used is to arrange a metallic mesh on the floating tubes. The roots of the plants are attached in the gaps in the mesh while a rod, that keeps the plant attached to the mesh, traverses the plant at the base of the leaves. This system involves physical damage to the plant with dire consequences for the plant, even causing death.

Other different systems for growing floating plants that do not use floating tubes is, for example, based on substrates manufactured from plant fibres such as coconut fibre. The root system of the plants is arranged between the fibres, such that the roots are submerged in the water and the leaves emerge in the air above the plant fibre substrate. However, this system has great disadvantages and drawbacks. Firstly, the substrate absorbs water, slowly sinking and the plants sink with it, which die when submerged. Secondly, this plant substrate can be further a source of microbial contamination by bacteria, virus and fungi, as the plant fibres rot thereby contaminating the water with its own matter.

Another example of a substrate for growing plants on an aquatic surface, although in this case relating to land plants, is described in the patent W02005/102030*.*

This patent discloses a floating platform for land plant crops in saline water formed by floating vessels providing a land plant growth environment, with a portion of the plant or root system in contact with the saline water. These containers can be joined together by a cord or rope and are confined in a rigid or flexible floating frame, thereby forming the floating crop platform.

The invention patent ES2277537 describes an assembly support structure for securing floating plant crops formed by a flat cross-linked structure that has at least one housing to house the crop in question and at least two anchoring elements joined to independent support elements. This substrate is designed to withstand the forces and moments generated by the plants as they grow, but the substrate has to be coupled to an independent support element for securing to the surface of the water, since, by itself, it is not effective. Therefore, the need to provide a new independent support element has been identified, which can be attached to containers or substrates for the floating plant crops, preventing, as much as possible, the aforementioned problems and which can further be assembled to other similar elements or structures for the purpose of covering the surface of the water with the desired crop. In addition, this independent support element can be used for securing pieces that stand out on the surface of the water in form and / or colour, such that the pieces, attached to the independent support element, give more buoyancy if so desired. Therefore, and in order to provide a new and independent floating support intended for floating plant species crops, the invention herein discloses a flat floating polygonal structure having at least two connectors allowing several floating structures to be assembled to each other and that, in turn, has a set of bars in the inner space allowing the coupling of non-independent substrates where crops or plants are placed, as described in the patent ES2277537.

By assembling the floating structures to each other, any aquatic surface can be filled, creating a mesh system where floating plant crops and planting are to be carried out.

### Detailed description of the Invention

The invention herein relates to a floating assembly structure, which serves as a support element to substrates or containers intended for floating plant species crops and planting, said structure being an independent support element which can be further assembled to other floating assembly structures to create a mesh system on the surface of the water.

The invention comprises a flat polygonal floating structure of three or more sides and at least two connector or assembly elements, wherein at least one of them is a male coupler and the other is a female coupler, allowing the floating structures to be connected to each other.

The structure can further have infinite sides, in this case, a circumference or ellipse. It can have a regular geometric contour or can have an irregular contour.

Assembling these structures to each other by means of their connector elements results in a system of floating assembly structures which can cover the desired surface of the water depending on the number of assembled structures. Since the connector elements can be located at vertices and / or sides, the structures can be joined together in different ways, that is to say, through their vertices, through their sides or through vertices and sides simultaneously. Depending on the way the structures are assembled, the surface of the water can be completely covered or spaces can be left between said structures in which other macrophyte plant containers can, in turn, be placed, if desired.

Optionally, the system or macro structure formed on the surface of water can be secured to the outside by means of one or several floating assembly structures that are in the outer parts of said system.

The structures are configured such that, on assembling and forming the macro structure on the surface of the water, they can offset the forces and moments generated by the movement of water and non-independent substrates where the plants in question are located, keeping said system on the water surface. The structure can have coupling bars connected at their ends to the contour of the floating structure and / or other inner bars. Non-independent support substrates can be coupled on these bars that can hold seeds, plants and / or combinations thereof. The number and position of the coupling bars can vary depending on the number and shape of the substrates to be placed on them. Optionally, the coupling bars can be connected together or to the contour of the structure by means of flexible arcs that provide some mobility to the bars to fit to the size and number of substrates that are supported on them.

These substrates can be attached to the aforementioned coupling bars or even simultaneously using the bars that form the perimeter of the floating structure, they just need to have some anchor points or handles in the appropriate shape and size to be able to couple the bars and edges of the floating assembly structure, object of the invention herein.

Optionally the floating assembly structure can contain two coupling bars parallel to each other and joined at their ends to the contour of the structure. The separation of these parallel bars results in two parts or halves of the structure that can be used to fill gaps at the edges of the mesh to a macro structure on the surface of the water.

If desired, a flexible material can be used to make the floating assembly structure in order to prevent animals from becoming trapped in the structure and so they get out of it without difficulty.

The bars can be cylindrical or can be shaped like an inverted C, thus saving material.

### Description of the drawings

The accompanying set of drawings help to better understand the invention and are expressly related to a particular embodiment of said invention. These figures, wherein by way of illustration and not-limiting thereof, include:
Figure 1. - A side view of the floating assembly structure object of this invention.
Figure 2. - A plan view of the floating assembly structure in fig. 1.

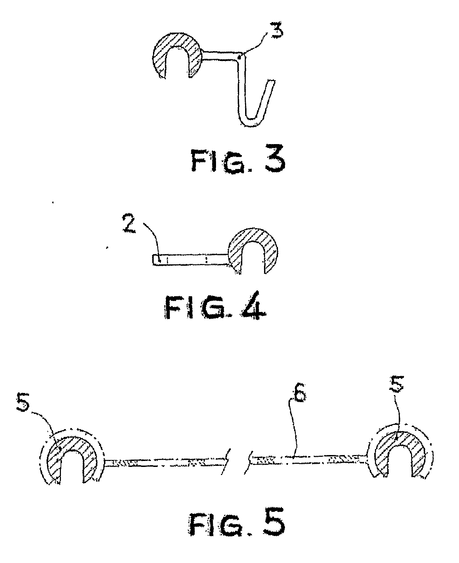

Figure 3. - A sectional view in fig. 2 according to the cutting plane III-III.
Figure 4. - A sectional view in fig. 2 according to the cutting plane IV-IV.
Figure 5. - A sectional view in fig. 2 according to the cutting plane V-V.
Figure 6. - A plan view showing one way of assembling the floating assembly structures in fig. 1.
Figure 7. - A plan view of another way of assembling the floating assembly structures in fig. 2.

In said figures, the various references appearing in them have the following meanings:
1. - Floating assembly structure
2. - Female connector or assembly elements
3. - Male connector or assembly elements
4. - Coupling bars parallel to each other
5. - Coupling bars
6. - Substrates or containers with non-independent support
7. - Flexible arcs

### Preferred embodiment of the invention

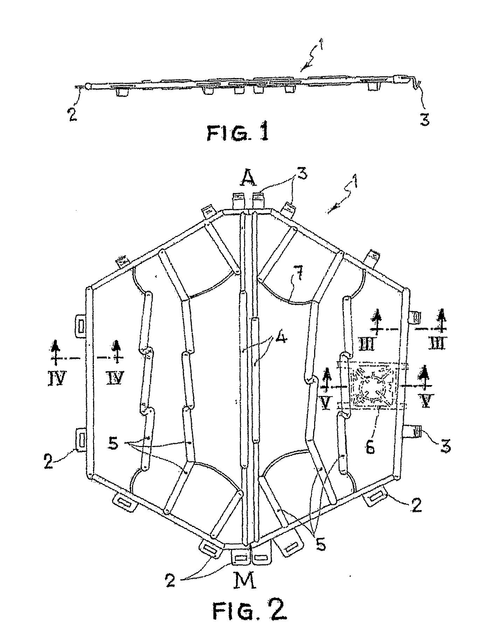

A preferred embodiment of the invention herein, which serves as a support element to substrates intended for floating plant species crops and planting, or to coloured surfaces, with said embodiment being an independent support element, consisting of, as shown in fig. 2, a floating structure (1) shaped like an irregular hexagonal polygon, which has two connector elements (couplers) in each of its sides. Three consecutive sides include a female coupler (2), while the other three remaining sides include male type couplers (3). The structure further includes two female couplers on one of the vertices (M) and two male couplers on its opposite vertex (A). The structure can be cut by using scissors or another cutting tool on the line that divides these two couplers from vertex A and vertex M giving rise to two semi-structures.

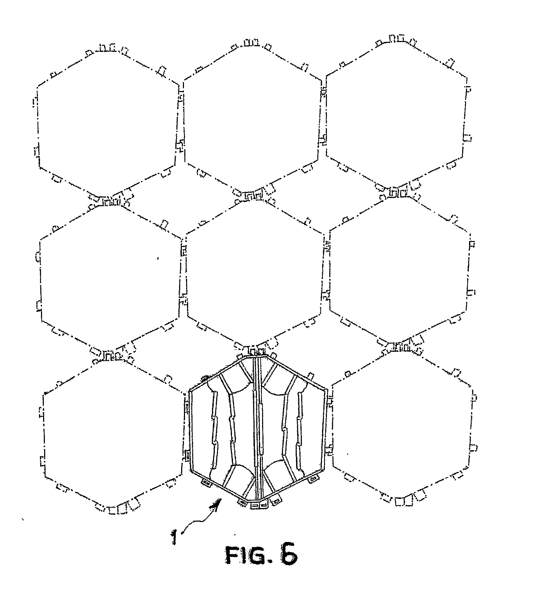

The connector elements enable the hexagonal structures to be assembled to each other, with different forms of connection being possible. An example of assembly between these structures is shown in Figure 6 where the structures are connected to each other through some of its vertices and sides simultaneously; resulting in a mesh system that leaves some spaces between them where non- independent substrates that hold the floating plant species crops can also be placed.

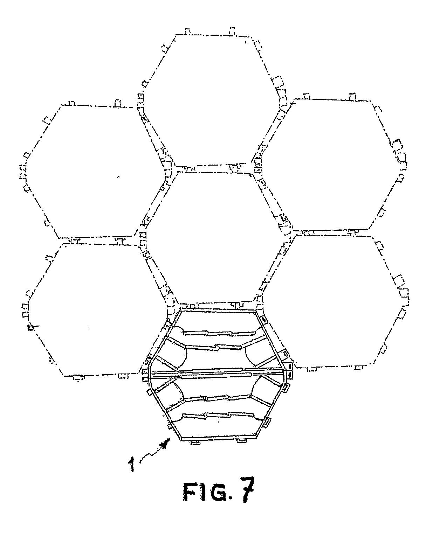

Another example of how to assemble floating assembly structures to each other is shown in Figure 7 where said structures are connected together through their sides, thus creating a mesh system that covers the surface of the water without leaving gaps between the structures, but allowing rotation between them, the passage of water and thereby avoiding vertical forces caused by waves or sudden movements of turbulent flows and by contrast the separation between them could be adjusted to prevent easy passage of the liquid where they are installed to retain solids between them or predetermined physical actions.

The floating assembly structure, object of this preferred embodiment, has two central (4) coupling bars, parallel or not, that go from vertex A to vertex M and with adequate separation between them to allow the separation thereof, such that the hexagonal structure can be divided into two halves along the AM axis by using scissors or another cutting element in order to use each of these halves in filling the gaps at the edges of the mesh.

The floating assembly structure has a plurality of coupling bars (5) in its interior space. Said bars are connected at their ends to the polygonal structure and are those that allow, together with the bars that make up the contour of the structure, the coupling of non-independent support containers or substrates (6). The structure includes, in this case, flexible arcs (7) that connect the coupling bars together or to the contour of the structure, such that the coupling bars (5) can vary in distance and adapt to the substrates or containers that fit over them.

The floating assembly structure is designed to offset the forces and moments generated by the water and by the plants as they grow and protrude from the water level, such that the structure remains stable on the surface of the water.

## Claims

1. A floating assembly structure (1) with own or independent support, for securing substrates for floating plant species **characterized in that** it is shaped like a flat polygon with at least three sides and has at least two assembly elements (2,3) with other floating assembly structures, where at least one assembly element is female coupling (2) and another assembly element is a male coupling (3) and one or more inner coupling bars (5) are joined at their ends to the flat polygonal structure (1) and / or other inner bars and configured to allow coupling of non-independent support substrates(6).

2. Structure according to claim 1, **characterized in that** the assembly elements are located on the sides and / or vertices of the flat polygonal structure.

3. Structure according to claims 1 and 2 **characterized in that** the coupling bars (5) are joined to each other or to the contour of the floating structure (1) through flexible arcs (7) that allow the distance between said bars (5) to be varied.

4. Structure according to claims 1 to 3, **characterized by** having two internal coupling bars parallel to each other (4) through which the structure can be divided into two parts or halves.

5. Structure according to claims 1 to 4, **characterized in that** it can be joined to other floating assembly structures by means of its assembly elements located on its sides and / or vertices to form a meshed system on the surface of water.
